# EUROPEAN PATENT APPLICATION

(11) **EP 4 310 155 A1**
(43) Date of publication of application: **24.01.2024**
(21) Application number: 22771568.7
(22) Date of filing: 18.03.2022
(51) Int. Cl.: C09D 11/16, B43K 8/02

(54) **OILY INK COMPOSITION FOR WRITING UTENSIL**

(30) Priority: 19.03.2021 JP 2021046357
(71) Applicant: Mitsubishi Pencil Company, Limited, Tokyo 140-8537 (JP)
(72) Inventor: SETAGAWA, Yosuke, Tokyo 140-8537 (JP)
(74) Representative: Vossius & Partner Patentanwälte Rechtsanwälte mbB
(86) International application number: PCT/JP2022/012879
(87) International publication number: WO 2022/196826

(57) **Abstract**

This oily ink composition for writing utensils comprises a pigment, a binder resin, an organic solvent, and fluororesin particles, wherein the total content of the pigment and the fluororesin particles is 35-70 mass% with respect to the mass of the solid components of the oily ink composition and the ratio of the mass of the fluororesin particles to the total mass of the pigment and the fluororesin particles is 0.10-0.45.

## Description

### FIELD

The present invention relates to an oil-based (oily) ink composition for writing instruments.

### BACKGROUND

Oil-based ink compositions used in felt-tip pens are required to have performance such as adhesion of lines drawn on writing surfaces of various materials, and light resistance that inhibits color fading caused by prolonged exposure to sunlight. In particular, oil-based inks are required to yield drawn lines with sufficient adhesion even on poorly wettable materials, such as synthetic resin films, resin-coated papers, and metals. In addition, oil-based inks are required to have abrasion resistance even after enduring ultraviolet rays and the like.

In order to satisfy these requirements, PTL 1 discloses an oil-based ink composition for writing instruments, which contains a colorant, a resin, an organic solvent, and fluorine-based resin particles, and in which the fluorine-based resin particles have an average particle size of 0.1 µm or more but less than 1.0 µm as measured by a dynamic light scattering method.

### [CITATION LIST]

### [PATENT LITERATURE]

[PTL 1] JP 2019-11401

### SUMMARY

### [TECHNICAL PROBLEM]

According to the oil-based ink composition for writing instruments disclosed in the PTL 1, drawn lines that can not only withstand repeated abrasion and abrasion with a stronger force, but also maintain such abrasion resistance even after enduring ultraviolet rays can be obtained.

However, drawn lines capable of withstanding a more severe environment are demanded. In such an environment, even the oil-based ink composition for writing instruments disclosed in the PTL 1 does not provide a lasting drawn line in some cases.

In view of the above, the present invention provides an oil-based ink composition for writing instruments, with which a drawn line having a further improved abrasion resistance can be obtained.

### [SOLUTION TO PROBLEM]

The present inventors carried out extensive studies and discovered that the above-described problems can be solved by the following means, thereby completing the present invention. In other words, the present invention encompasses the following:
<Mode 1> An oil-based ink composition for writing instruments, containing: a pigment; a binder resin; an organic solvent; and fluorine-based resin particles,
   wherein
   a total content ratio of the pigment and the fluorine-based resin particles is 35 to 70mass%, based on the mass of solid components of the oil-based ink composition for writing instruments, and
   a ratio of the mass of the fluorine-based resin particles with respect to a total mass of the pigment and the fluorine-based resin particles is 0.10 to 0.45.
<Mode 2> The oil-based ink composition for writing instruments according to Mode 1, wherein the pigment contains a metal oxide-based pigment.
<Mode 3> The oil-based ink composition for writing instruments according to Mode 2, wherein the metal oxide-based pigment is titanium oxide.
<Mode 4> The oil-based ink composition for writing instruments according to Mode 2 or 3, wherein a ratio of the average particle size of the metal oxide-based pigment with respect to the average particle size of the fluorine-based resin particles is 0.2 to 4.0 as measured by a dynamic light scattering method.
<Mode 5> The oil-based ink composition for writing instruments according to any one of Modes 1 to 4, wherein the pigment contains a carbon-based pigment.
<Mode 6> The oil-based ink composition for writing instruments according to any one of Modes 1 to 4, wherein the fluorine-based resin particles are polytetrafluoroethylene particles.
<Mode 7> A writing instrument, including at least: an ink reservoir; a writing portion; and a holding portion,
   wherein the oil-based ink composition for writing instruments according to any one of Modes 1 to 6 is stored in the ink reservoir.
<Mode 8> The writing instrument according to Mode 7, further including an annular ink retainer arranged in such a manner as to surround the writing portion inside the writing instrument.
<Mode 9> The writing instrument according to Mode 8, wherein the density of the ink retainer according to JIS K7222 is 50 kg/m³ or less, and the number of cells according to JIS K6400-1 is 40 cells/25 mm or more.

### [ADVANTAGEIOUS EFFECTS OF INVENTION]

According to the present invention, an oil-based ink composition for writing instruments, with which a drawn line having a further improved abrasion resistance can be obtained, can be provided.

### BRIEF DESCRIPTION OF DRAWINGS

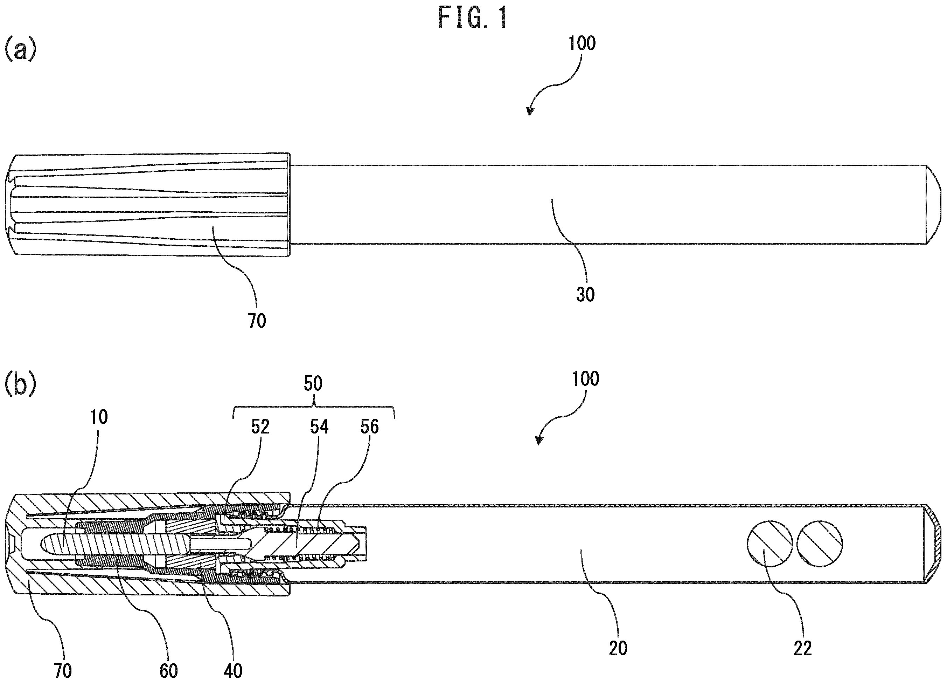

FIG. 1(a) is a side view illustrating one mode of a valve-type marking pen according to the present invention, and FIG. 1(b) is a side cross-sectional view illustrating one mode of the valve-type marking pen according to the present invention.

### DESCRIPTION OF EMBODIMENTS

### <<Oil-Based Ink Composition for Writing Instruments>>

The oil-based ink composition for writing instruments according to the present invention is an oil-based ink composition for writing instruments which contains: a pigment; a binder resin; an organic solvent; and fluorine-based resin particles,
wherein
a total content ratio of the pigment and the fluorine-based resin particles is 35 to 70mass%, based on the mass of solid components of the oil-based ink composition for writing instruments, and
a ratio of the mass of the fluorine-based resin particles with respect to a total mass of the pigment and the fluorine-based resin particles is 0.10 to 0.45.

The present inventors discovered that the abrasion resistance of a drawn line was further improved by the above-described constitution. Specifically, it is believed that, by a combination of (1) a high total content ratio of the pigment and the fluorine-based resin particles (a low total content ratio of the binder resin and a dye) and (2) a prescribed amount of a fluorine-based resin with respect to a total mass of the pigment and the fluorine-based resin particles, the fluorine-based resin particles are made unlikely to move within a drawn line when the drawn line is abraded, as a result of which the abrasion resistance attributed to the fluorine-based resin particles is likely to be maintained.

Based on the mass of solid components of the oil-based ink composition for writing instruments, the total content ratio of the pigment and the fluorine-based resin particles may be 35mass% or more, 40mass% or more, 45mass% or more, or 50mass% or more, but may be 70mass% or less, 65mass% or less, or 60mass% or less. The term "solid components of the oil-based ink composition for writing instruments" used herein means a portion obtained by excluding volatile components such as the organic solvent from the oil-based ink composition for writing instruments.

Based on a total mass of the oil-based ink composition for writing instruments, the content ratio of the solid components of the oil-based ink composition for writing instruments may be 10mass% or more, 15mass% or more, 20mass% or more, or 25mass% or more, but may be 40mass% or less, 35mass% or less, or 30mass% or less.

The oil-based ink composition for writing instruments according to the present invention may further contain a dye.

Constituents of the present invention will now be described.

### <Pigment>

As the pigment, any pigment, for example, a metal oxide-based pigment or a carbon-based pigment, can be used. As the pigment, other pigment used as a color pigment can also be used.

The pigment may have an average particle size of 50 nm or more, 70 nm or more, 90 nm or more, 100 nm or more, 120 nm or more, 150 nm or more, 170 nm or more, or 200 nm or more, but 1,000 nm or less, 800 nm or less, 700 nm or less, 600 nm or less, 550 nm or less, 500 nm or less, 450 nm or less, or 400 nm or less. When the average particle size of the pigment is in this range, the movement of the fluorine-based resin particles within a drawn line caused by abrasion of the drawn line can be significantly inhibited, whereby a further improved abrasion resistance can be obtained.

It is noted here that the term "average particle size" used herein refers to an average particle size determined by a dynamic light scattering method. Specifically, the average particle size is an average particle size value of a cumulant analysis in a scattering intensity distribution, which is calculated using a nanoparticle analyzer (nanoPartica SZ-100V2, manufactured by HORIBA, Ltd.).

### (Metal Oxide-Based Pigment)

As the metal oxide-based pigment, for example, talc, silica, alumina, titanium oxide, alumina silicate, or alumina can be used.

### (Carbon-Based Pigment)

As the carbon-based pigment, for example, amorphous carbon powder, graphene, carbon nanotubes, graphite, or carbon black can be used.

### (Other Color Pigment)

Examples of other color pigment that can be used include: organic pigments, such as azo pigments, condensed azo pigments, phthalocyanine pigments, anthraquinone pigments, quinacridone pigments, isoindolinone pigments, diketopyrrolopyrrole pigments, and various lake pigments; and metallic pigments, such as fluorescent pigments, pearl pigments, gold pigments, and silver pigments.

### <Binder Resin>

As the binder resin, the following can be used: a ketone resin, a sulfonamide resin, a maleic acid resin, a terpene resin, a terpene phenol resin, a rosin ester, a xylene resin, an alkyd resin, a phenol resin, a butyral resin, rosin, a polyvinylpyrrolidone, a polyvinyl alcohol, an acrylic resin, a melamine resin, a cellulose resin, and a derivative of these resins. As the derivative of these resins, for example, a rosin-modified maleic acid resin can be used. The above-exemplified resins may be used singly, or in combination as a mixture.

Based on the mass of solid components of the oil-based ink composition for writing instruments, the content ratio of the binder resin may be 10mass% or more, 15mass% or more, 20mass% or more, or 25mass% or more, but may be 50mass% or less, 45mass% or less, 40mass% or less, 35mass% or less, or 30mass% or less.

### <Organic Solvent>

As the organic solvent, for example, the following can be used: aromatics, alcohols, polyhydric alcohols, glycol ethers, hydrocarbons, and esters. These solvents may be used singly or in combination.

Examples of the aromatics that can be used include benzyl alcohol, ethylene glycol monophenyl ether, ethylene glycol monobenzyl ether, propylene glycol monophenyl ether, diethylene glycol monophenyl ether, alkyl sulfonic acid phenyl esters, butyl phthalate, ethylhexyl phthalate, tridecyl phthalate, ethyl hexyl trimellitate, diethylene glycol dibenzoate, and dipropylene glycol dibenzoate.

Examples of the alcohols that can be used include ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methylamyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, n-decanol, trimethylnonyl alcohol, tetradecanol, heptadecanol, cyclohexanol, and 2-methylcyclohexanol.

Examples of the polyhydric alcohols that can be used include ethylene glycol, diethylene glycol, 3-methyl-1,3-butanediol, triethylene glycol, dipropylene glycol, 1,3-propanediol, 1,3-butanediol, 1,5-pentanediol, hexylene glycol, and octylene glycol.

Examples of the glycol ethers that can be used include methyl isopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethylbutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol tert-butyl ether dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, and tetrapropylene glycol monobutyl ether.

Examples of the hydrocarbons that can be used include: linear hydrocarbons, such as hexane, isohexane, heptane, octane, nonane, and decane; and cyclic hydrocarbons, such as cyclohexane, methylcyclohexane, and ethylcyclohexane.

Examples of the esters that can be used include propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, caprylic triglyceride, tributyl acetate citrate, octyl oxystearate, propylene glycol monoricinoleate, methyl 2-hydroxyisobutyrate, and 3-methoxybutyl acetate.

### <Fluorine-Based Resin Particles>

Fluorine-based resin particles are particles composed of a polymer obtained by polymerization of fluorine-containing monomers. In particular, the fluorine-based resin particles contained in the oil-based ink composition for writing instruments according to the present invention have an average particle size of 100 nm or more, but less than 1,000 nm as measured by a dynamic light scattering method.

From the standpoint of facilitating the exposure of the fluorine-based resin particles on the surface of a drawn line and thereby improving the abrasion resistance of the drawn line, the average particle size is preferably 100 nm or more, 200 nm or more, or 300 nm or more, and from the standpoint of reducing the effects of enduring ultraviolet rays and the like on the drawn line and thereby allowing the drawn line to maintain abrasion resistance even after the endurance, the average particle size is preferably less than 1,000 nm, 900 nm or less, or 800 nm or less.

As the fluorine-based resin particles, fully fluorinated resin particles, partially fluorinated resin particles, or fluorinated resin-olefin copolymer particles can be used and, thereamong, it is preferred to use fully fluorinated resin particles from the standpoint of reducing the frictional coefficient of the surface of a drawn line and improving the abrasion resistance of the drawn line as a result.

When the oil-based ink composition for writing instruments according to the present invention contains a metal oxide-based pigment, the ratio of the average particle size of the metal oxide-based pigment with respect to the average particle size of the fluorine-based resin particles may be 0.2 or higher, 0.3 or higher, 0.5 or higher, 0.7 or higher, 0.9 or higher, 1.0 or higher, or 1.2 or higher, 1.5 or higher, 1.7 or higher, or 2.0 or higher, but may be 4.0 or lower, 3.5 or lower, 3.3 or lower, 3.0 or lower, 2.8 or lower, 2.5 or lower, 2.3 or lower, 2.0 or lower, 1.7 or lower, or 1.5 or lower. When this ratio is in the above-described range, the movement of the fluorine-based resin particles within a drawn line caused by abrasion of the drawn line can be inhibited in a favorable manner, whereby further improved abrasion resistance can be obtained.

Examples of the fully fluorinated resin particles include polytetrafluoroethylene (PTFE) particles, perfluoroalkoxyalkane (PFA) particles, and tetrafluoroethylene-hexafluoropropylene copolymer (FEP) particles, among which PTFE particles are preferred from the standpoint of chemical stability, cost, and the like.

Examples of the partially fluorinated resin particles include polyvinylidene fluoride (PVDF) particles and polychlorotrifluoroethylene (PCTFE) particles.

The fluorinated resin-olefin copolymer particles are copolymer particles formed of a fully fluorinated resin and/or a partially fluorinated resin and an olefin, and examples thereof include tetrafluoroethylene-ethylene copolymer (ETFE) particles and chlorotrifluoroethylene-ethylene copolymer (ECTFE) particles.

The ratio of the mass of the fluorine-based resin particles with respect to a total mass of the pigment and the fluorine-based resin particles may be 0.10 or higher, 0.15 or higher, 0.20 or higher, or 0.25 or higher, but may be 0.45 or lower, 0.40 or lower, or 0.35 or lower.

### <Dye>

As the dye, for example, any of the dyes used in ordinary dye ink compositions, such as a direct dye, an acidic dye, a basic dye, a mordant/acidic mordant dye, a spirit-soluble dye, an azoic dye, a sulfur/sulfur vat dye, a vat dye, a disperse dye, an oil-soluble dye, a food dye, a metal complex dye, a salt-forming dye, and a dye used for dyeing a resin, or a solution of these dyes can be used.

### <Other Components>

The oil-based ink composition for writing instruments according to the present invention may also contain optional other components. Examples of the other components include a dispersant, a leveling agent, a rust inhibitor, a preservative, a lubricant, and a resin. As the dispersant, for example, a butyral resin can be used. As the leveling agent, for example, a fluorine-based surfactant, a silicone oil, or a phosphate-based surfactant can be used.

### «Writing Instrument»

The writing instrument of the present invention is a writing instrument which includes at least: an ink reservoir; a writing portion; and a holding portion,
wherein the above-described oil-based ink composition for writing instruments is stored in the ink reservoir.

The writing instrument of the present invention may be a marking pen or a ballpoint pen.

The term "marking pen" used herein means a pen having a mechanism for supplying ink stored in an ink reservoir to a resin-made writing portion by means of capillary action, and encompasses those pens that are referred to as "felt-tip pens" by those skilled in the art. The term "ballpoint pen" used herein means a pen having a mechanism for discharging ink stored in an ink reservoir by means of rotation of a ball provided in a writing portion.

In particular, when the writing instrument of the present invention is a marking pen, from the standpoint of obtaining favorable ink outflow characteristics, the writing instrument of the present invention is preferably a valve-type marking pen which further includes a valve mechanism between the ink reservoir and the writing portion. In addition, in this case, from the standpoint of obtaining an ink flow rate sufficient for writing while preventing the writing portion from being dislodged, the writing instrument of the present invention preferably further includes an annular ink retainer arranged in such a manner as to surround the writing portion. One mode of such a valve-type marking pen will now be described referring to the drawings.

As illustrated in FIG. 1, one mode of a valve-type marking pen 100 includes: a writing portion 10; an ink reservoir 20; a holding portion 30; an ink retainer 40; a valve mechanism 50; an inner cap 60; and an outer cap 70. These constituents will now be described with reference to the drawings, as appropriate.

### <Ink Reservoir>

In the ink reservoir, the above-described oil-based ink composition for writing instruments is stored.

As the ink reservoir, any member can be used, as long as it is capable of storing ink and supplying the ink to the writing portion.

From the standpoint of inhibiting clogging with ink, the ink reservoir is preferably formed of a hollow space. Further, from the standpoint of uniformly dispersing a pigment before use, a stirrer 22 is preferably included in the ink reservoir 20 as illustrated in FIG. 1.

### <Writing Portion>

The writing portion may be formed of any material in accordance with the intended use of the writing instrument. When the writing instrument of the present invention is a marking pen, the writing portion is, for example, a fiber core or a plastic core. When the writing instrument of the present invention is a ballpoint pen, the writing portion may be provided with a ballpoint pen tip on the tip.

The fiber core is a core obtained by processing a parallel fiber bundle composed of one or a combination of two or more kinds of natural fibers, animal hair fibers, polyacetal resins, acrylic resins, polyester resins, polyamide resins, polyurethane resins, polyolefin resins, polyvinyl resins, polycarbonate resins, polyether resins, and polyphenylene resins, or a fiber bundle such as a felt, or a core obtained by processing these fiber bundles with a resin.

### <Holding Portion>

The holding portion may be a part that enables the writing instrument to be held by a hand, and may be integrated with the ink reservoir 20 as illustrated in FIG. 1 or, although not illustrated, may be separate from the ink reservoir and have a hollow structure that can accommodate the ink reservoir. The holding portion may have, for example, a cylindrical shape or a polygonal cylindrical shape.

### <Ink Retainer>

The ink retainer is an annular retainer that is arranged in such a manner as to surround the writing portion. A material constituting the ink retainer is not particularly limited, as long as it is a flexible porous material, and may be, for example, a urethane foam, particularly a polyether urethane foam, a polyester urethane foam, or the like.

When the writing instrument has an inner cap, the ink retainer may be arranged in such a manner as to fill a void between the inner cap and the writing portion.

In particular, when an oil-based ink composition for writing instruments which has a high content ratio of a particle component is used as in the present invention, the ink retainer preferably has a low density and a large number of cells from the standpoint of obtaining an ink flow rate sufficient for writing while preventing the writing portion from being dislodged.

More specifically, from the standpoint of obtaining an ink flow rate sufficient for writing, the density of the ink retainer is preferably 50 kg/m³ or less. This density is measured in accordance with JIS K7222. This density may be 45 kg/m³ or less, or 40 kg/m³ or less, but may be 10 kg/m³ or more, 15 kg/m³ or more, or 20 kg/m³ or more.

Further, from the standpoint of increasing the number of points of contact with the writing portion and thereby preventing the writing portion from being dislodged, the number of cells of the ink retainer is preferably 40 cells/25 mm or more. The number of cells is measured in accordance with JIS K6400-1. The number of cells may be 45 cells/25 mm or more, but may be 100 cells/25 mm or less, 90 cells/25 mm or less, 80 cells/25 mm or less, 70 cells/25 mm or less, or 60 cells/25 mm or less.

### <Valve Mechanism>

As illustrated in FIG. 1, the valve mechanism 50 includes: a valve seat 52 which has front and rear openings communicating with each other; a valve body 54 which opens and closes by moving back and forth with respect to the valve seat 52; and a spring 56 which biases the valve body 54 toward the writing portion 10.

The rear end of the writing portion 10 abuts against the tip of the valve body 54, and the valve seat 52 is opened when the writing portion 10 moves rearward, as a result of which ink flows through the valve seat 52 and is supplied to the writing portion 10. To supply ink to the writing portion by the back-and-forth movement of the writing portion based on this mechanism may be referred to as "pumping" by those skilled in the art.

### <Inner Cap>

The inner cap is a tapered cylindrical body that is hollow in the longitudinal direction, and one end thereof on the side of the writing portion is narrow and has ribs formed thereon to support the writing portion 10. The writing portion 10 is arranged in a manner that it can move back and forth inside the inner cap 60. The other end of the inner cap 60 on the side of the valve mechanism is a portion that increases in thickness to the largest diameter in a stepped manner, and the stepped surface has a slanted edge shape with respect to the central axis.

### <Outer Cap>

The outer cap is a member for covering the writing portion. The outer cap may be configured so as to be fitted with the inner cap or the holding portion.

### <<Method of Producing Oil-Based Ink Composition for Writing Instruments>>

The oil-based ink composition for writing instruments can be produced by any conventionally known method while mixing the above-described pigment, binder resin, organic solvent, and fluorine-based resin particles using a stirring equipment such as a disper.

### EXAMPLES

The present invention will now be described concretely by way of Examples and Comparative Examples; however, the present invention is not limited thereto.

### <<Example 1>>

An oil-based ink composition for writing instruments of Example 1 was produced in an amount of 100 mass parts by mixing with stirring 4 mass parts of a dye (VALIFAST BLACK 3830, manufactured by Orient Chemical Industries Co., Ltd.) as a colorant, 4 mass parts of a carbon black tonner (average particle size: 200 nm) as a pigment, 3 mass parts of fluorine-based resin particles (ALGOFLON L203F, manufactured by Solvay S.A., average particle size: 300 nm), 3 mass parts of a rosin-modified maleic acid resin (MALKYD No. 33, manufactured by Arakawa Chemical Industries, Ltd.) as a binder resin, 0.9 mass parts of nitrocellulose, and 3 mass parts of rosin ester, along with 26.0 mass parts of ethanol and 50.10 mass parts of propylene glycol monoethyl ether as solvents.

### <<Examples 2 to 9 and Comparative Examples 1 to 4»

Oil-based ink compositions for writing instruments of Examples 2 to 9 and Comparative Examples 1 to 4 were each produced in an amount of 100 mass parts in the same manner as in Example 1, except that the type and the content of each constituent were changed as shown in Tables 1 and 2. It is noted here that the titanium oxide tonner used here had an average particle size of 400 nm.

### <<Production of Writing Instruments>>

The above-obtained oil-based ink compositions for writing instruments were each filled into PC-5M manufactured by Mitsubishi Pencil Co., Ltd. (trade name "POSCA", pen core: medium round core (polyethylene terephthalate (PET) fiber core)) to produce marking pens. Thereafter, the abrasion resistance was evaluated using the medium round core.

### <<Evaluation of Ink Compositions>>

### <Abrasion Resistance (KimWipes)>

Based on the disclosure of PTL 1, the abrasion resistance was evaluated using KimWipes. Specifically, using each of the above-produced marking pens, a line was drawn and dried on the surface of a polyethylene terephthalate (PET) and that of an SUS plate. This drawn line was abraded by moving thereon KimWipes five times with a 500-g weight being placed thereon, and the abrasion resistance of the drawn line was evaluated.

The evaluation criteria were as follows:
A: The drawn line remained almost entirely.
B: 90% of the drawn line remained.
C: 80% of the drawn line remained.
D: 70% of the drawn line remained.
E: Less than 70% of the drawn line remained.

### <Abrasion Resistance (Steel Wool)>

A line drawn in the same manner as described above was abraded by moving thereon steel wool five times with a 500-g weight being placed thereon, and the abrasion resistance of this drawn line was evaluated. The evaluation criteria were the same as described above.

### <Concealability>

The above-obtained drawn line was visually observed to check if the base material underneath the drawn line was visible or not. The evaluation criteria were as follows:
A: The base material was not recognizable at all.
B: The base material was not clearly visible, but recognizable.
C: The base material was clearly visible.

### <Viscosity>

A writing was made using each of the above-produced writing instruments, and the viscosity was assessed by sensory evaluation. The evaluation criteria were as follows:
A: The viscosity was at a level that did not cause any problem in writing.
B: The viscosity was at a level that caused a slight problem in writing.
C: The viscosity was at a level that caused a problem in writing.

The constitutions and evaluation results of Examples and Comparative Examples are shown in Tables 1 and 2.

### [Table 1]

**Table 1**

| | | | | Comparative Example 1 | Comparative Example 2 | Example 1 | Example 2 | Comparative Example 3 | Example 3 | Example 4 | Example 5 |
|---|---|---|---|---|---|---|---|---|---|---|---|
| Constitution | Components (mass parts) | Colorant | black dye | 9.00 | 4.00 | 4.00 | 4.00 | 4.00 | 4.00 | 4.00 | 4.00 |
| | | Pigment | titanium oxide (average particle size: 400 nm) | 0.00 | 0.00 | 0.00 | 3.50 | 3.50 | 7.00 | 7.00 | 10.50 |
| | | | carbon black (average particle size: 200 nm) | 0.00 | 2.00 | 4.00 | 2.00 | 2.00 | 2.00 | 2.00 | 2.00 |
| | | PTFE (average particle size: 300 nm) | | 3.00 | 3.00 | 3.00 | 3.00 | 0.00 | 3.00 | 6.00 | 6.00 |
| | | Dispersant | butyral resin | 0.15 | 0.95 | 1.75 | 1.75 | 1.60 | 2.55 | 2.70 | 3.50 |
| | | Resin | rosin ester | 6.00 | 6.00 | 3.00 | 3.00 | 3.00 | 3.00 | 3.00 | 3.00 |
| | | | maleic acid resin | 6.00 | 6.00 | 3.00 | 3.00 | 3.00 | 3.00 | 3.00 | 3.00 |
| | | | nitrocellulose | 1.80 | 1.80 | 0.90 | 0.90 | 0.90 | 0.90 | 0.90 | 0.90 |
| | | Organic solvent | EtOH | 30.9 | 25.9 | 31.9 | 31.9 | 35.0 | 31.9 | 28.7 | 18.7 |
| | | | PGM | 43.20 | 50.40 | 48.50 | 47.00 | 47.00 | 42.70 | 42.70 | 48.40 |
| | | Total | | 100.00 | 100.00 | 100.00 | 100.00 | 100.00 | 100.00 | 100.00 | 100.00 |
| | Solid components in mass parts (binder resin + PTFE + pigment + dye) | | | 25.95 | 23.75 | 19.65 | 21.15 | 18.00 | 25.45 | 28.60 | 32.90 |
| | Binder resin in solid components (mass%) | | | 53.18 | 58.11 | 35.11 | 32.62 | 38.33 | 27.11 | 24.13 | 20.97 |
| | Pigment and PTFE in solid components (mass%) | | | 11.56 | 21.05 | 35.62 | 40.19 | 30.56 | 47.15 | 52.45 | 56.23 |
| | PTFE/(pigment + PTFE) | | | 1.00 | 0.60 | 0.43 | 0.35 | 0.00 | 0.25 | 0.40 | 0.32 |
| Evaluation results | Adherence | KimWipes | SUS plate | A | A | A | A | E | A | A | A |
| | | | PET film | A | A | A | A | E | A | A | A |
| | | Steel wool | SUS plate | E | D | B | B | E | B | A | A |
| | | | PET film | E | C | B | B | E | A | A | A |
| | Concealability | | | A | A | B | A | A | A | A | A |
| | Viscosity | | | A | A | A | A | A | A | A | A |

### [Table 2]

**Table 2**

| | | | | Comparative Example 4 | Example 6 | Example 7 | Example 8 | Example 9 |
|---|---|---|---|---|---|---|---|---|
| Constitution | Components (mass parts) | Pigment | titanium oxide (average particle size: 400 nm) | 17.50 | 17.50 | 17.50 | 14.00 | 21.00 |
| | | PTFE (average particle size: 300 nm) | | 0.00 | 3.00 | 6.00 | 3.00 | 3.00 |
| | | Dispersant | butyral resin | 4.00 | 4.15 | 4.30 | 3.35 | 4.95 |
| | | Resin | rosin ester | 6.00 | 6.00 | 6.00 | 6.00 | 6.00 |
| | | | nitrocellulose | 1.26 | 1.26 | 1.26 | 1.26 | 1.26 |
| | | Organic solvent | EtOH | 15.00 | 16.85 | 18.70 | 21.85 | 11.85 |
| | | | PGM | 56.24 | 51.24 | 46.24 | 50.54 | 51.94 |
| | Total | | | 100.00 | 100.00 | 100.00 | 100.00 | 100.00 |
| | Solid components in mass parts (binder resin + PTFE + pigment + dye) | | | 28.76 | 31.91 | 35.06 | 27.61 | 36.21 |
| | Binder resin in solid components (mass%) | | | 25.24 | 22.75 | 20.71 | 26.29 | 20.05 |
| | Pigment and PTFE in solid components (mass%) | | | 60.85 | 64.24 | 67.03 | 61.57 | 66.28 |
| | PTFE/(pigment + PTFE) | | | 0.00 | 0.15 | 0.26 | 0.18 | 0.13 |
| Evaluation results | Adherence | KimWipes | SUS plate | E | A | A | A | A |
| | | | PET film | E | A | A | A | A |
| | | Steel wool | SUS plate | E | A | A | A | A |
| | | | PET film | E | A | A | A | A |
| | Concealability | | | A | A | A | B | A |
| | Viscosity | | | A | A | B | A | B |

From Tables 1 and 2, it can be understood that the oil-based ink compositions for writing instruments of Examples 1 to 9, which contain a pigment, a binder resin, an organic solvent and fluorine-based resin particles, and in which the total content ratio of the pigment and the fluorine-based resin particles is 35 to 70mass%, based on the mass of solid components in the respective oil-based ink compositions for writing instruments and the ratio of the mass of the fluorine-based resin particles with respect to the total mass of the pigment and the fluorine-based resin particles is 0.10 to 0.45, can yield drawn lines with superior abrasion resistance as compared to the oil-based ink compositions for writing instruments of Comparative Examples 1 to 4.

### <<Evaluation of Writing Instruments>>

### <Production of Writing Instruments for Evaluation>

### (Example 10)

The oil-based ink composition for writing instruments of Example 5 was filled into the ink reservoir of the valve-type marking pen illustrated in FIG. 1 (PC-5M, manufactured by Mitsubishi Pencil Co., Ltd.) to produce a writing instrument of Example 10. As the writing portion, a round core made of PET fibers (replacement core PCR-5, manufactured by Mitsubishi Pencil Co., Ltd.) was used.

As the ink retainer, a soft porous body having a density of 30 ± 5 kg/m³ and 50 ± 5 cells/25 mm, which is commercially available as a filter made of a urethane foam (UF), was used.

### (Examples 11 to 17)

Writing instruments of Examples 11 to 17 were produced in the same manner as in Example 10, except that the oil-based ink composition for writing instruments and the ink retainer were changed as shown in Table 3. It is noted here that the oil-based ink composition for writing instruments used in Examples 14 to 17 was the oil-based ink composition of Example 6.

### <Evaluation>

### (Ink Flow Rate)

The thus produced writing instruments were each pumped with the writing portion being pressed against a piece of paper to allow the ink to permeate to the tip of the writing portion. Subsequently, in this state, each writing instrument was further pumped 30 times and then used for drawing a line of 250 cm. The evaluation criteria were as follows:
A: The flow rate was at a level that allowed a 250-cm line to be drawn without any blurriness.
B: The flow rate was at a level that allowed a line not reaching 250 cm to be drawn without any blurriness.
C: The flow rate was at a level that allowed a line to be drawn with blurriness.

### (Difficulty of Dislodgement of Writing Portion)

After the above-described evaluation of the ink flow rate, each writing instrument was shaken 30 times in the longitudinal direction with the writing portion being exposed, and the dislodge condition of the writing portion was observed. Thereafter, the operation of shaking the writing instrument 30 times after each drawing of a 250-cm line and then observing the dislodge condition of the writing portion was repeated 50 times. The evaluation criteria were as follows:
A: Neither dislodgement nor protrusion of the writing portion was observed at all.
B: The writing portion sometimes protruded toward the tip from the original position.
C: The writing portion was dislodged.

The constitutions and evaluation results of Examples and Comparative Examples are shown in Table 3.

### [Table 3]

**Table 3**

| | | | | Example 10 | Example 11 | Example 12 | Example 13 | Example 14 | Example 15 | Example 16 | Example 17 |
|---|---|---|---|---|---|---|---|---|---|---|---|
| Ink constitution | Components (mass parts) | Colorant | black dye | 4.00 | 4.00 | 4.00 | 4.00 | | | | |
| | | Pigment | titanium oxide (average particle size: 400 nm) | 10.50 | 10.50 | 10.50 | 10.50 | 17.50 | 17.50 | 17.50 | 17.50 |
| | | | carbon black (average particle size: 200 nm) | 2.00 | 2.00 | 2.00 | 2.00 | | | | |
| | | PTFE (average particle size: 300 nm) | | 6.00 | 6.00 | 6.00 | 6.00 | 3.00 | 3.00 | 3.00 | 3.00 |
| | | Dispersant | butyral resin | 3.50 | 3.50 | 3.50 | 3.50 | 4.30 | 4.30 | 4.30 | 4.30 |
| | | Resin | rosin ester | 3.00 | 3.00 | 3.00 | 3.00 | 6.00 | 6.00 | 6.00 | 6.00 |
| | | | maleic acid resin | 3.00 | 3.00 | 3.00 | 3.00 | | | | |
| | | | nitrocellulose | 0.90 | 0.90 | 0.90 | 0.90 | 1.26 | 1.26 | 1.26 | 1.26 |
| | | Organic solvent | EtOH | 18.7 | 18.7 | 18.7 | 18.7 | 16.85 | 16.9 | 16.9 | 16.9 |
| | | | PGM | 48.40 | 48.40 | 48.40 | 48.40 | 51.24 | 51.24 | 51.24 | 51.24 |
| | | Total | | 100.00 | 100.00 | 100.00 | 100.00 | 100.00 | 100.00 | 100.00 | 100.00 |
| | Solid components in mass parts (binder resin + PTFE + pigment + dye) | | | 32.90 | 32.90 | 32.90 | 32.90 | 31.91 | 31.91 | 31.91 | 31.91 |
| | Binder resin in solid components (mass%) | | | 20.97 | 20.97 | 20.97 | 20.97 | 22.75 | 22.75 | 22.75 | 22.75 |
| | Pigment and PTFE in solid components (mass%) | | | 56.23 | 56.23 | 56.23 | 56.23 | 64.24 | 64.24 | 64.24 | 64.24 |
| | PTFE/(pigment + PTFE) | | | 0.32 | 0.32 | 0.32 | 0.32 | 0.15 | 0.15 | 0.15 | 0.15 |
| Ink retainer | Material | | | UF | UF | UF | UF | UF | UF | UF | UF |
| | Density (kg/m³) | | | 30±5 | 30±5 | 30±5 | 57±5 | 30±5 | 30±5 | 30±5 | 57±5 |
| | Number of cells (cells/25 mm) | | | 50±5 | 30±4 | 13±3 | 55±5 | 50±5 | 30±4 | 13±3 | 55±5 |
| Evaluation results | Ink flow rate | | | A | A | A | C | A | A | A | C |
| | Difficulty of dislodgement of writing portion | | | A | B | C | A | A | B | C | A |

From Table 3, it can be understood that the writing instruments of Examples 10 to 12 and 14 to 16, in which an ink retainer having a density of 30 ± 5 kg/m³ is used, have a favorable ink flow rate. In addition, it can be understood that, among these writing instruments, those writing instruments of Examples 10 and 14, in which an ink retainer having 50 ± 5 cells/25 mm is used, are also favorable in terms of the difficulty of dislodgement of the writing portion.

### REFERENCE SIGNS LIST

100: writing instrument
10: writing portion
20: ink reservoir
22: stirring ball
30: holding portion
40: ink retainer
50: valve mechanism
52: valve seat
54: valve body
56: spring
60: inner cap
70: outer cap

## Claims

1. An oil-based ink composition for writing instruments, containing: a pigment; a binder resin; an organic solvent; and fluorine-based resin particles,
wherein
a total content ratio of the pigment and the fluorine-based resin particles is 35 to 70 mass%, based on the mass of solid components of the oil-based ink composition for writing instruments, and
a ratio of the mass of the fluorine-based resin particles with respect to a total mass of the pigment and the fluorine-based resin particles is 0.10 to 0.45.

2. The oil-based ink composition for writing instruments according to Claim 1, wherein the pigment contains a metal oxide-based pigment.

3. The oil-based ink composition for writing instruments according to Claim 2, wherein the metal oxide-based pigment is titanium oxide.

4. The oil-based ink composition for writing instruments according to Claim 2 or 3, wherein a ratio of the average particle size of the metal oxide-based pigment with respect to the average particle size of the fluorine-based resin particles is 0.2 to 4.0 as measured by a dynamic light scattering method.

5. The oil-based ink composition for writing instruments according to any one of Claims 1 to 4, wherein the pigment contains a carbon-based pigment.

6. The oil-based ink composition for writing instruments according to any one of Claims 1 to 4, wherein the fluorine-based resin particles are polytetrafluoroethylene particles.

7. A writing instrument, including at least: an ink reservoir; a writing portion; and a holding portion,
wherein the oil-based ink composition for writing instruments according to any one of Claims 1 to 6 is stored in the ink reservoir.

8. The writing instrument according to Claim 7, further including an annular ink retainer arranged in such a manner as to surround the writing portion inside the writing instrument.

9. The writing instrument according to Claim 8, wherein the density of the ink retainer according to JIS K7222 is 50 kg/m³ or less, and the number of cells according to JIS K6400-1 is 40 cells/25 mm or more.
